# FASCICULE DE BREVET EUROPEEN

(11) **EP 0 774 674 B1**
(45) Date de publication et mention de la délivrance du brevet: **26.02.2003**
(21) Numéro de dépôt: 96402387.3
(22) Date de dépôt: 08.11.1996
(51) Int. Cl.: G01V 1/40

(54) **Méthode et dispositif de prospection sismique utilisant un outil de forage en action dans un puits**
Verfahren und Vorrichtung für seismische Untersuchungen mit Hilfe eines in einem Bohrloch operierendes Bohrwerkzeuges
Method and device for seismic surveying, using a drilling tool operating in a borehole

(30) Priorité: 20.11.1995 FR 9513830
(43) Date de publication de la demande: 21.05.1997
(73) Titulaire: INSTITUT FRANCAIS DU PETROLE, 92852 Rueil-Malmaison Cedex (FR)
(72) Inventeur: Naville, Charles, 91350 Grigny (FR)

(56) Documents cités:
- GB-A- 2 266 372
- GB-A- 2 273 984
- US-A- 3 190 388
- US-A- 4 829 489
- US-A- 4 965 774

## Description

La présente invention concerne une méthode et un dispositif de prospection sismique utilisant une source d'ébranlements sismiques au fond d'un puits.

La méthode convient notamment dans le cas où la source d'ébranlements au fond du puits est un outil de forage associé à une garniture de forage, en progression au fond d'un puits, à l'extrémité d'un train de tiges.

Suivant une technique couramment utilisée, le forage des puits est effectué en entraînant en rotation par une table d'entraînement motorisée disposée en surface, une colonne de forage constituée d'un train de tiges interconnectées, et un outil de forage fixé à son extrémité inférieure.

Des outils de forage de ce type produisent des ondes sismiques puissantes et l'on a déjà pensé à utiliser ces ondes pour faire des opérations de mesure sur les terrains traversés par l'outil durant le forage et notamment de la prospection sismique (opérations dites de MWD), de façon à diminuer les coûts de la prospection pétrolière du fait qu'il n'y a pas d'immobilisation des puits à cette fin.

Différents exemples de mise en oeuvre dans le domaine, sont décrits dans les brevets FR 1.584.951, US 4.965.774, 4.964.087, 4.926.391, 4.718.048, 4.862.423, 4.675.852 etc.

Cependant, ce type d'opération est difficile à mettre en oeuvre pour de nombreuses raisons. Une d'entre elles est que la forme des signaux émis et le spectre d'émission de la source sont généralement mal connus du fait de l'éloignement du lieu d'émission par rapport à la station de surface. Une autre est que les ébranlements sont captés le plus souvent par des accéléromètres placés en contact de la colonne tubulaire de forage en tête de celle-ci, après s'être propagés mécaniquement sur toute sa longueur. Dans ces conditions, les signaux transmis sont altérés fortement par des phénomènes de résonance et d'absorption complexes tout au long de la colonne et dépendent de la structure de l'installation de surface. La fonction de transfert de l'ensemble étant mal connue, on manque donc de référence rigoureuse pour le traitement des signaux sismiques.

On peut obtenir un signal bien représentatif des ébranlements émis par l'outil si l'on fixe le ou les accéléromètres à la base de la tige de forage à condition de pouvoir transmettre les mesures en surface à une cadence suffisante. Il est possible de le faire au moyen d'ondes modulées, telles que des ondes acoustiques se propageant dans le fluide contenu dans le puits à condition que le débit de données transmis reste relativement faible.

Pour des applications où le débit de données à transmettre est élevé comme c'est le cas dans le cadre d'opérations de prospection, on peut utiliser des moyens de mémorisation de fond très importants, mais on est astreint régulièrement à les ramener en surface, par retrait de la colonne de forage ou repêchage au câble, pour les vider de leur contenu.

Une autre technique disponible pour la transmission à débit élevé des signaux captés par un ou plusieurs accéléromètres de fond, est décrite par exemple dans les brevets FR 2.688.026 et 2.700.018 (GB 2 273 984) du demandeur. Elle consiste essentiellement à utiliser une colonne de forage dont une partie au moins est équipée d'une ligne pour la transmission à la station de surface des signaux de référence issus des capteurs de fond.

Des difficultés d'interprétation apparaissent également du fait que les ébranlements ne sont pas émis uniquement au niveau de l'outil de forage. On constate que la colonne de forage elle-même agit comme une source d'ébranlements secondaires. C'est également le cas de la plateforme de forage en surface qui transmet aux terrains par ses pieds, de l'énergie mécanique qui s'est propagée le long de la colonne et agit donc également comme une source d'ébranlements secondaires.

On sait et on le vérifie aisément, que les ondes guidées propagées par un train de tiges, s'atténuent moins vite, en fonction de la distance à la source, que les ondes volumiques se propageant dans la formation. Comme les ondes guidées rayonnent dans la formation et créent des ébranlements secondaires parasites, il est justifié de placer des éléments de garnitures de forage appropriés pour en atténuer les effets.

Par le brevet FR 2 700 018 (GB 2 273 984) précité, on connaît une méthode pour réaliser des opérations de prospection sismique d'une formation en utilisant les ébranlements créés par un outil de forage relié à une colonne tubulaire à la base d'un puits foré au travers de la formation. Elle comporte l'installation d'un ensemble de capteurs sismiques en contact avec la formation et reliés à une station de commande et d'acquisition, pour acquérir et enregistrer les signaux sismiques émanant de la formation. Cette méthode comporte le positionnement de capteurs au voisinage de l'outil de forage pour détecter des signaux de référence représentatifs des ébranlements créés par celui-ci et communiqués à la formation, leur transmission à la station de commande et d'acquisition, et la réalisation d'opérations de traitement de signaux sismiques reçus telles qu'une mise en corrélation des signaux sismiques captés avec lesdits signaux de référence.

Des moyens de découplage sont utilisés pour atténuer la propagation directe le long de la colonne tubulaire des ébranlements créés par l'outil de forage, tels que des éléments de colonnes pourvus de moyens élastiques d'absorption des chocs adaptés à fonctionner en traction ou en compression et intercalés sur la colonne de forage plus ou moins loin de l'outil de forage, et choisis de préférence de façon à amortir principalement les vibrations dont les fréquences sont dans une bande de fréquence utile pour la prospection sismique.

L'utilisation de capteurs de fond associés éventuellement à des moyens de mémorisation in situ comme le décrit le brevet antérieur permet d'obtenir des signaux de référence traduisant fidèlement les ébranlements créés par l'outil de forage en fonctionnement. Mais cette solution n'est pas toujours possible ni recommandable pour les raisons suivantes ;
- l'équipement de mesure au fond n'est pas conçu pour fonctionner à la température élevée qui règne au fond du trou dans les applications en géothermie ou à grande profondeur notamment; et
- l'équipement de forage ou les conditions d'exploitation utilisés ne se prêtent pas du tout à l'incorporation de moyens capteurs de référence au voisinage de l'outil ;
- la profondeur où l'équipement de fond est amené à fonctionner rend inopérants les moyens de transmission prévus pour assurer la transmission des signaux de mesure à la station d'enregistrement et de contrôle en surface.

La méthode selon l'invention permet de réaliser la prospection sismique d'une formation géologique traversée par un puits par application aux terrains d'ébranlements au moyen d'une source d'ébranlements sismiques constituée d'un outil de forage en progression au fond d'un puits et relié à un équipement de forage en surface par une colonne de forage comprenant un ensemble de masses-tiges et un train de tiges, et des moyens moteurs pour l'entraînement de l'outil de forage tout en évitant les inconvénients notés ci-dessus.

La méthode de prospection sismique d'une formation géologique traversée par un puits comporte l'application aux terrains d'ébranlements au moyen d'une source d'ébranlements sismiques constituée d'un outil de forage en progression au fond d'un puits et relié à un équipement de forage en surface par une colonne de forage comprenant un ensemble de masses-tiges, un train de tiges, des moyens moteurs pour l'entraînement de l'outil de forage, et des moyens de découplage disposés au voisinage de l'outil de forage permettant à celui-ci de rester sensiblement au contact du fond du puits. La méthode comprend la détection de signaux de référence indicatifs des vibrations de la colonne de forage, la réception des ondes émanant de la formation en réponse aux ébranlements communiqués aux terrains par un ensemble de récepteurs sismiques couplés avec la formation traversée par le puits, l'enregistrement des ondes reçues aux récepteurs sismiques, par un système d'acquisition et de collecte des signaux sismiques détectés par les récepteurs sismiques, et la corrélation des signaux sismiques enregistrés avec lesdits signaux de référence. Elle est caractérisée en ce qu'elle comporte l'utilisation pour cette corrélation, de signaux de référence filtrés par les moyens de découplage et des moyens d'amortissement et de filtrage intercalés sur la colonne, le coefficient d'amortissement cumulé des moyens de découplage et des moyens d'amortissement et de filtrage, étant de préférence compris entre 5 et 15, ces signaux de référence étant fournis par des moyens capteurs disposés au contact du train de tiges sous la surface de la formation géologique et au-dessus des moyens de découplage et des moyens d'amortissement et de filtrage.

Quand le puits présente un coude, on utilise pour la corrélation, des signaux de référence issus de moyens capteurs disposés par exemple entre le coude et les moyens d'amortissement.

Suivant un mode de mise en oeuvre, on utilise des moyens d'amortissement intercalés sur la colonne pour réduire les émissions parasites dans la formation, et des moyens de filtrage comprenant au moins une portion de colonne, dont le diamètre est intermédiaire entre le diamètre des masses-tiges et celui du train de tiges, la longueur de cette portion de colonne étant choisie en fonction des longueurs d'onde dans une bande de fréquence sismique, pour atténuer dans cette bande, les réflexions multiples dues aux discontinuités de diamètre intermédiaires entre les masses-tiges et les tiges du train de tiges, les moyens capteurs étant disposés sous les moyens de découplage supplémentaires.

Le dispositif de prospection sismique d'une formation géologique selon l'invention comporte une source d'ébranlements sismiques constituée d'un outil de forage en progression au fond d'un puits et relié à un équipement de forage en surface par une colonne de forage incluant un ensemble de masses-tiges et un train de tiges, des moyens moteurs pour l'entraînement de l'outil de forage et des moyens de découplage disposés au voisinage de l'outil de forage permettant à celui-ci de rester sensiblement au contact du fond du puits, un ensemble de récepteurs sismiques couplés avec la formation traversée par le puits pour recevoir des ondes émanant de la formation, et un système d'acquisition et de collecte des signaux sismiques détectés par les récepteurs sismiques. Le dispositif est caractérisé en ce qu'il comporte des moyens d'amortissement et de filtrage intercalés sur la colonne de forage, des moyens capteurs des vibrations de la colonne de forage connectés au système d'acquisition et lui fournissant des signaux de référence, ces moyens capteurs étant disposés au contact du train de tiges sous la surface de la formation géologique et au-dessus des moyens d'amortissement et des moyens d'amortissement et de filtrage, le coefficient d'amortissement cumulé des moyens de découplage et des moyens d'amortissement et de filtrage intercalés étant de préférence compris entre 5 et 15.

Suivant un mode de réalisation, les moyens d'amortissement et de filtrage comportent des moyens d'amortissement intercalés sur la colonne pour réduire les émissions parasites dans la formation, et des moyens de filtrage comprenant au moins une portion de colonne, dont le diamètre est intermédiaire entre le diamètre des masses-tiges et celui du train de tiges, la longueur de cette portion de colonne étant choisie en fonction des longueurs d'onde dans une bande de fréquence sismique, pour atténuer dans cette bande, les réflexions multiples dues aux discontinuités de diamètre intermédiaires entre les masses-tiges et les tiges du train de tiges, les moyens capteurs étant disposés sous les moyens de découplage supplémentaires.

Suivant un mode de réalisation, les moyens d'amortissement et de filtrage comportent plusieurs portions de colonne de diamètres décroissants raccordées les unes aux autres, interposées entre les masses-tiges et le train de pour minimiser les réflexions multiples dues aux discontinuités intermédiaires entre les masses-tiges et les tiges du train de tiges.

Les moyens capteurs sont disposés par exemple dans un raccord annulaire interposé sur le train de tiges, qui est relié au système d'acquisition par des câbles intégrés dans un ensemble de tiges câblées.

Les moyens capteurs sont reliés au système d'acquisition par une liaison mixte incluant un raccord de câble cylindrique pour relier les moyens capteurs à une portion de câble courant à l'intérieur des tiges, elle-même connectée à un ensemble de tiges câblées remontant jusqu'au système d'acquisition.

On a découvert à l'expérience qu'il n'était pas absolument nécessaire de placer les moyens capteurs au voisinage immédiat de l'outil de fond, pour obtenir des signaux de référence fidèles bien représentatifs des signaux sismiques qui sont effectivement transmis à la formation. On a vérifié qu'avec des moyens capteurs placés relativement haut sur la colonne de forage, on obtient des signaux bien représentatifs à condition d'utiliser les moyens de découplage et/ou de filtrage définis ci-dessus, bien qu'ils atténuent partiellement les signaux.

Cet agencement est avantageux dans de nombreux cas.
- En raccourcissant la distance entre les moyens capteurs à la station d'acquisition et d'enregistrement en surface, on simplifie et facilite la transmission des signaux,
- Dans toutes les applications où la température en fond de puits est très élevée: grande profondeur, géothermie etc., le conditionnement des moyens capteurs et éventuellement des mémoires in situ est plus facile à assurer;
- Il est toujours possible quand on utilise des moyens de transmission immatérielle par ondes pour transmettre les signaux de référence en surface, de les placer avec les moyens capteurs, assez haut sur la colonne pour rester en deçà de la distance limite de propagation des ondes dans la formation.

D'autres caractéristiques et avantages de la méthode et du dispositif selon l'invention, apparaîtront à la lecture de la description ci-après de modes de réalisation décrits à titre d'exemples non limitatifs, en se référant aux dessins annexés où :
- la Fig.1 montre schématiquement un mode de réalisation du dispositif de prospection sismique selon l'invention ;
- la Fig.2 montre schématiquement l'agencement de la station de commande et d'enregistrement en surface;
- la Fig.3 montre un premier mode de réalisation du dispositif selon l'invention utilisant des capteurs de référence éloignés de l'outil de forage;
- la Fig.4 montre un deuxième mode de réalisation du dispositif selon l'invention;
- la Fig. 5 montre un premier mode de connexion de l'ensemble de détection des vibrations à la station de surface;
- la Fig.6 montre un deuxième mode de connexion de l'ensemble de détection des vibrations à la station de surface;
- les Fig.7 à 9 montrent des enregistrements qui permettent de visualiser les effets apportés par la nouvelle disposition du dispositif.

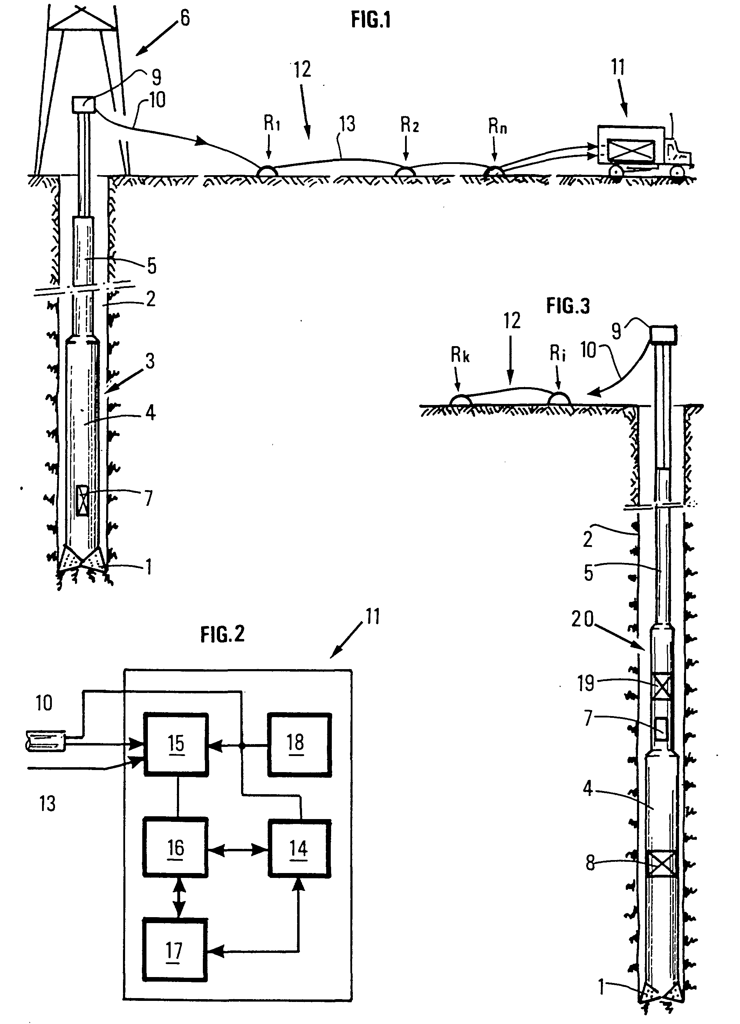

L'équipement de forage conventionnel schématisé à la Fig.1 comporte un outil de forage 1 en action au fond d'un puits 2. Il est vissé sous une colonne ou garniture de forage 3 constituée de plusieurs masses-tiges 4 et d'un train de tiges de forage 5, cette colonne étant reliée en surface à des moyens 6 de manoeuvre et/ou de mise en rotation.

Le dispositif comporte un ou plusieurs accéléromètres constituant un ensemble de mesure 7 de vibrations ou ébranlements créés par l'outil de forage en progression. Dans le cas où l'on dispose de tiges câblées ou bien si l'on dispose de moyens de mémorisation de fond ou de moyens de transmission à débit suffisant, on installe cet ensemble 7 dans un raccord intermédiaire au voisinage de l'outil, comme décrit dans le brevet FR 2.700.018 précité.

Les signaux de l'ensemble de mesure 7, sont transmis via un raccord tournant 9 et un câble 10, à une station de collecte et d'enregistrement 11. Les signaux sismiques émanant de la formation, en réponse aux ébranlements créés par l'outil de forage 1, sont reçus par un ensemble 12 de réception des signaux sismiques qui se sont propagés dans la formation traversée par le forage, suite aux ébranlements communiqués aux terrains par l'outil de forage 1. Cet ensemble de réception 12 comporte de façon connue, par exemple un grand nombre de géophones R1, R2, ... Rn connectés à la station 10, par des câbles de transmission 13 (ou éventuellement par liaisons hertziennes). Ces géophones peuvent être répartis en surface suivant une configuration à une ou deux dimensions, permettant de réaliser des opérations de prospection sismique dite 3D.

L'ensemble de réception peut comporter aussi des capteurs installés dans un ou plusieurs autres puits. On peut utiliser par exemple la partie supérieure déjà cuvelée d'un puits en cours de forage pour installer des capteurs, selon la méthode décrite dans le brevet FR 2 593 292 du demandeur, où des capteurs sont noyés dans le ciment injecté derrière un tube de cuvelage et couplés par lui aux formations traversées.

La station de surface 11 comporte (Fig.2) un ordinateur de commande 14 pilotant un ensemble 15 d'acquisition des signaux transmis en temps réel depuis l'ensemble de mesure 7 via le câble 9 d'une part et des signaux sismiques captés par les récepteurs R de l'ensemble de réception 12 et transmis par les câbles de transmission 13, un ensemble 16 d'enregistrement des signaux acquis, ainsi qu'une unité de visualisation 17. La station 11 comporte également un générateur électrique 18 connecté au câble 9 pour l'alimentation notamment de l'ensemble de mesure 7.

La station de surface 11 coordonne et synchronise l'acquisition directe des signaux de référence engendrés par les capteurs de référence 7 et qui représentent fidèlement les ébranlements communiqués aux terrains par l'outil de forage en fonctionnement d'une part et des signaux reçus par l'ensemble de réception 12. Par corrélation entre les signaux reçus et les signaux de référence, on établit des enregistrements sismiques des terrains traversés par le puits. Cette corrélation peut éventuellement être effectuée sur place par la station de surface 11.

Si le système de réception 12 comporte des capteurs R tri-axiaux capables de mesurer les composantes des signaux sismiques suivant trois axes orthogonaux, la station de surface 11 peut éventuellement réaliser une corrélation entre les composantes respectives des signaux sismiques reçus suivant les trois axes et celles du vecteur accélération reconstituées à partir des signaux fournis par les accéléromètres et les magnétomètres de fond.

De préférence, on effectue des corrélations sur un intervalle de temps suffisant, réparti de part et d'autre du pic d'auto-corrélation des signaux fournis par les capteurs de fond, de façon à prendre en compte les multiples précurseurs éventuels, en vue du traitement ultérieur des données sismiques enregistrées.

Différents essais ont été réalisés en utilisant une installation d'émission-réception sismique, telle que décrite dans les brevets précités du demandeur, pour déterminer la représentativité des sismogrammes obtenus dans des opérations de prospection sismique pour différentes configurations de la colonne de forage et différents positionnements de l'ensemble de mesure 7 le long de celle-ci.

Des comparaisons ont été faites avec le cas le plus favorable où cet ensemble de mesure 7 est placé au voisinage de l'outil comme schématisé à la Fig.1, et reproduit le plus fidèlement possible les ébranlements qu'il crée, et avec le cas le plus défavorable, où cet ensemble est placé au sommet du train de tiges comme pratiqué antérieurement.

On a pu vérifier que les signaux délivrés par les accéléromètres de l'ensemble de mesure 7 constituent également des signaux de référence valables pour la corrélation des signaux sismiques reçus, si :
a) cet ensemble est localisé dans le train de tiges 5 à distance de l'outil de forage 1, à la condition
   - qu'il soit sous la surface du sol et dans tous les cas de toute façon sous la table de rotation de la colonne de forage (non représentée), de façon à rester pratiquement insensible aux bruits et résonances, produits par la machinerie de forage, qui altèrent les signaux captés au sommet du train de tiges; et
   - que l'on intercale au-dessus de l'ensemble de mesure 7, des moyens de découplage mécanique 8 d'un type connu. Il peut s'agir d'amortisseurs destinés à absorber les chocs et les vibrations de toute nature : longitudinale, transversale, ainsi que les torsions. Le découplage obtenu doit être suffisant pour que l'outil de forage 1 reste en permanence au contact du fond du puits et ne rebondisse pas, et aussi pour atténuer radicalement les vibrations communiquées à la partie supérieure de la colonne de forage. Dans ces conditions, les accéléromètres délivrent des signaux représentatifs des ébranlements causés par l'outil et qui vont se propager dans la formation.

Dans le cas où l'on utilise un moteur de fond pour entraîner l'outil de forage, les éléments de couplage élastique inclus par construction dans ce type de moteur, peuvent assurer le découplage mécanique requis.

Pour atténuer suffisamment les ondes se propageant le long de la colonne, les moyens de découplage mécaniques peuvent comporter aussi de moyens d'amortissement 19 interposés entre l'ensemble de mesure 7 et la surface, ceci pour :
a) mieux éviter les transmissions sismiques parasites le long du puits susceptibles de venir brouiller les enregistrements; et
b) mieux atténuer dans la bande de fréquence utile pour la prospection sismique, les réflexions multiples dues aux discontinuités de section dans des positions de la colonne intermédiaires entre l'outil de forage et l'ensemble de mesure 7, et notamment les réflexions multiples importantes qui se produisent au niveau du raccordement des masses-tiges 4 et du train de tiges 5 dont les diamètres sont très différents.

Pour obtenir ces effets d'atténuation, on peut utiliser par exemple le mode de réalisation schématisé à la Fig.3. Une atténuation considérable des réflexions multiples est obtenue ici en intercalant entre les masses-tiges et la première des tiges 5, au moins un raccord de diamètre intermédiaire 20 dont la longueur est choisie en fonction des longueurs d'onde dans une bande de fréquence sismique. La longueur de cette portion de colonne est choisie égale par exemple au quart de la longueur d'onde moyenne dans la bande sismique.

Pour une fréquence centrale Fm = 30 Hz par exemple, compte-tenu de la vitesse de propagation des ondes dans les trains de tiges, de l'ordre de 5000 m/s, le quart de la longueur d'onde représente à peu près 42 m, soit environ 4 à 5 tiges lourdes de 9 m de longueur unitaire.

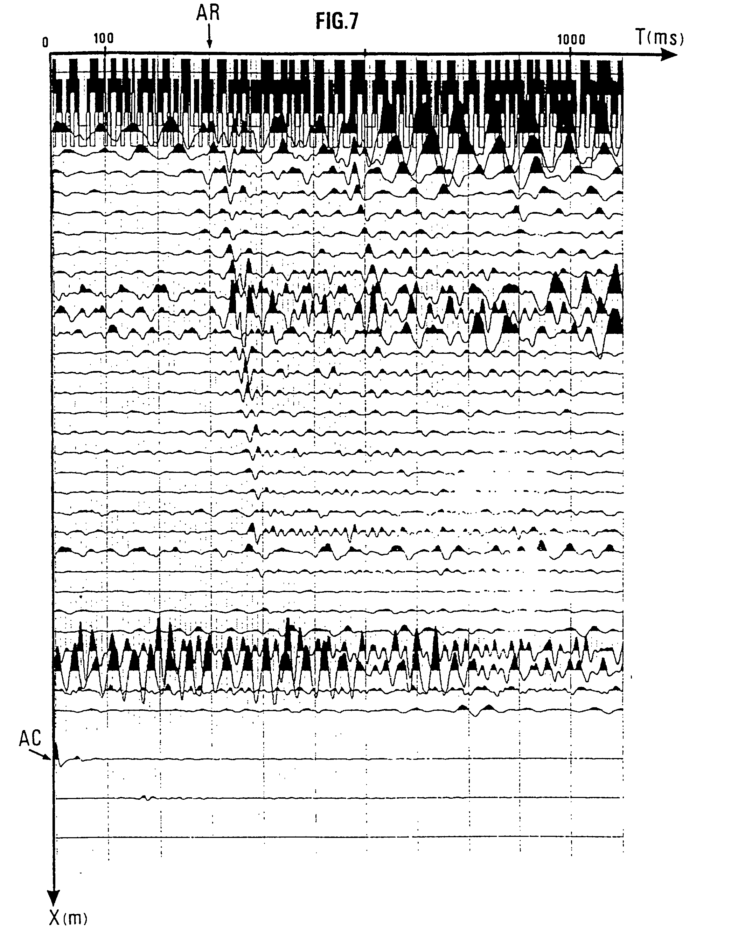

Les moyens d'amortissement 8 sont placés à proximité de l'outil 1, dans les masses-tiges 4. Les moyens d'amortissement supplémentaires 19 sont placés plus loin de l'outil sont intercalés dans cette portion de colonne 20. Des exemples de l'effet procuré par l'insertion de ces moyens d'amortissement et de filtrage, est montré aux Fig.7 à 9 où AC désigne l'auto-corrélation du signal de référence et AR, l'arrivée sismique directe après propagation de l'outil de forage à la surface.

La Fig.7 montre un exemple d'enregistrement corrélé avec un signal de référence placé entre l'outil et les moyens d'amortissement 8 (mode de réalisation antérieur).

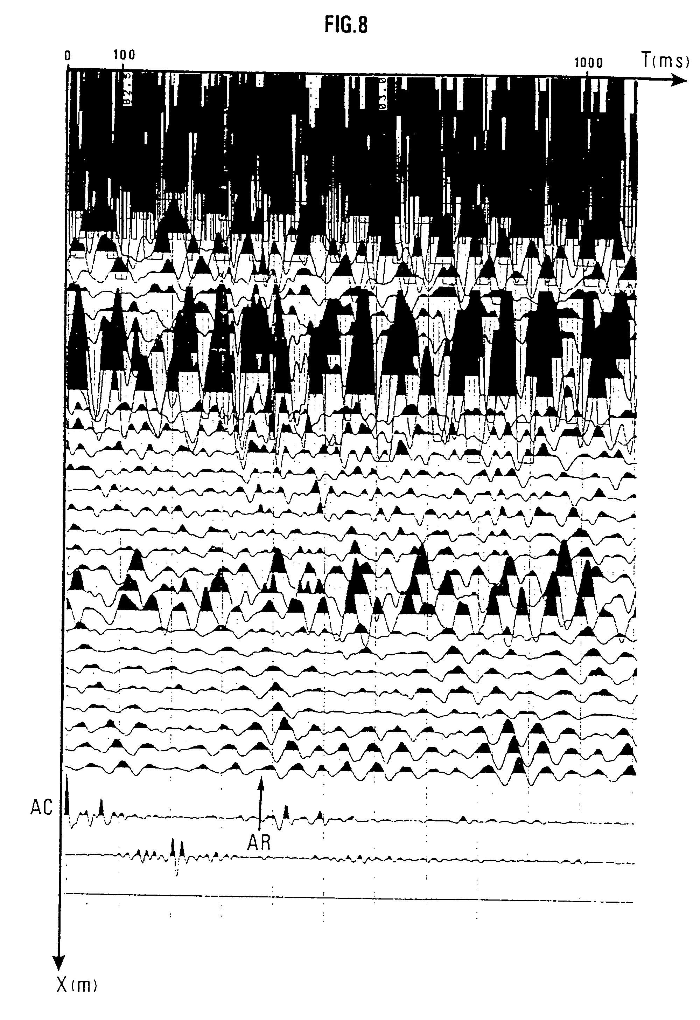

La Fig.8 montre un enregistrement corrélé, la colonne 3 étant dépourvue de tout moyen de découplage. L'homme de l'art peut constater aisément que l'arrivée sismique directe, bien visible sur la Fig.7, se trouve totalement dispersée dans le temps sur la Fig.8, ce qui entraîne de sérieuses difficultés dans les traitements ultérieurs.

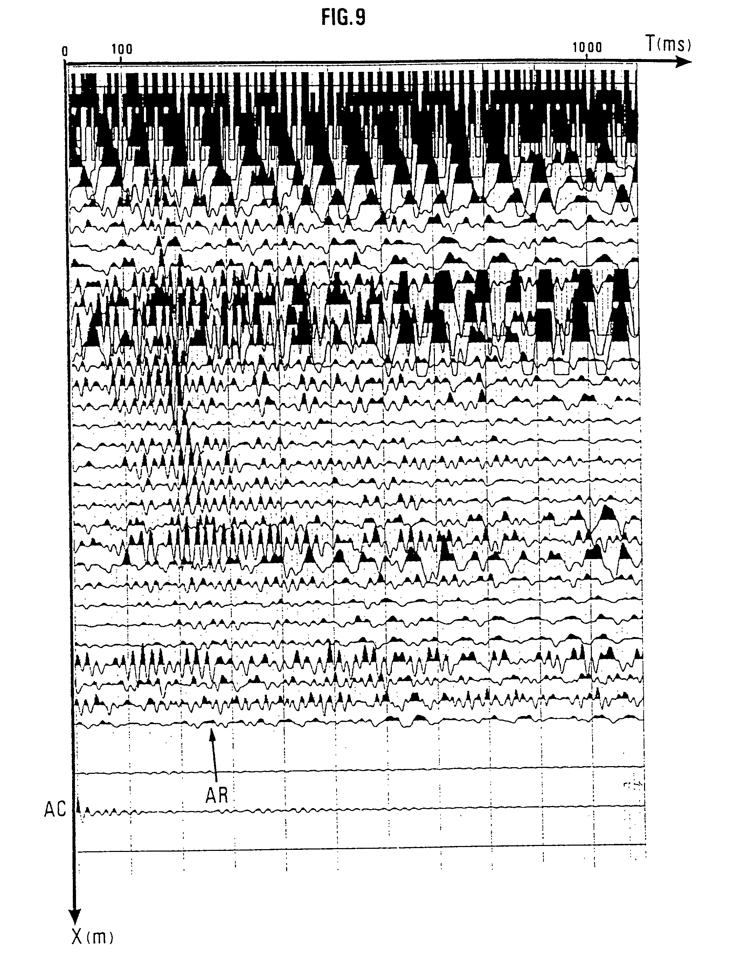

La Fig.9 montre un exemple d'enregistrement corrélé avec un signal de référence issu des moyens capteurs 7 placé au-dessus des moyens d'amortissement 8 mais au-dessous de la tête de rotation de la colonne de forage, cet enregistrement étant obtenu au cours du forage de la même formation que ceux des Fig.7, 8. L'homme de l'art peut également constater aisément que l'arrivée sismique directe est toujours bien visible, avec une localisation dans le temps de qualité comparable à celle de la Fig.7 obtenue, on le rappelle, quand les accéléromètres 7 sont placés au voisinage immédiat de l'outil de forage et au-dessus des moyens d'amortissement 8.

Bien que bénéficiant des avantages procurés par une disposition des moyens capteurs plus haut dans la garniture à un emplacement non gênant pour les opérations de forage, on obtient néanmoins avec l'arrangement proposé, après traitement, des enregistrements sismiques d'excellente qualité comparables à ceux obtenus avec des capteurs en fond de puits..

On obtient de bons résultats en choisissant des moyens d'amortissement 8 et 19 procurant un coefficient d'amortissement cumulé des vibrations entre l'outil et le sommet de la garniture, compris de préférence entre 5 et 15.

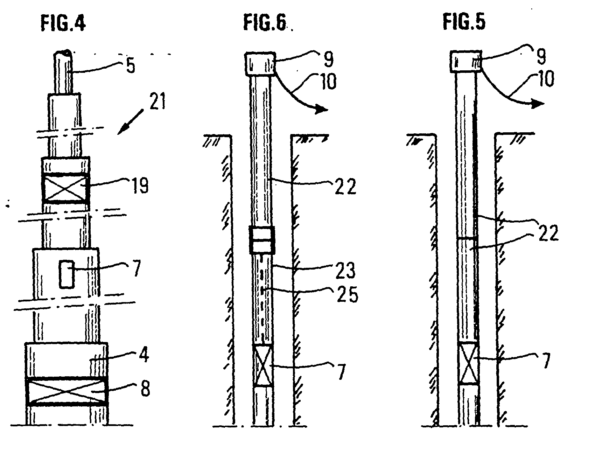

De préférence, on intercale (Fig.4) un ensemble 21 de raccords de sections décroissantes comprises entre la section des masses-tiges 4 et celle des tiges du train de tiges 5, du type connu des techniciens du forage sous le nom de tiges lourdes (ou HWDP pour "Heavy Weight Drill Pipes") de façon à constituer une garniture de forage de section décroissante ("taperized").

Les accéléromètres de l'ensemble 7 sont reliés à la station de surface 11 soit par des câbles descendus par l'intérieur des tiges ou bien par des câbles courant le long de tiges câblées.

Suivant le mode de mise en oeuvre de la Fig. 5, l'ensemble de mesure 7 peut être disposé dans un raccord annulaire interposé sur le train de tiges, comme décrit plus amplement dans le brevet FR 2 688 026. Il peut être relié à la surface par les câbles intégrés dans un ensemble 22 de tiges câblées. Ce type de bloc annulaire est "transparent" pour le foreur qui peut descendre des outils au travers jusqu'en bas de la colonne si nécessaire.

Suivant le mode de mise en oeuvre de la Fig.6, le même bloc annulaire 7 peut être relié à la surface par une liaison mixte. Un raccord de câble cylindrique le relie à une portion de câble 24 courant à l'intérieur des tiges, elle-même connectée à un ensemble 25 de tiges câblées remontant jusqu'à la surface. Avec cette configuration, le foreur qui désire descendre des outils vers le bas de la colonne, doit au préalable retirer la portion de câble fixe.

## Revendications

1. Méthode de prospection sismique d'une formation géologique traversée par un puits comportant l'application aux terrains d'ébranlements au moyen d'une source d'ébranlements sismiques constituée d'un outil de forage (1) en progression au fond d'un puits (2) et relié à un équipement de forage en surface (6) par une colonne de forage (3) comprenant un ensemble de masses-tiges (4), un train de tiges (5), et des moyens moteurs pour l'entraînement de l'outil de forage, et des moyens de découplage disposés au voisinage de l'outil de forage (1) permettant à celui-ci de rester sensiblement au contact du fond du puits, la méthode comprenant la détection de signaux de référence indicatifs des vibrations de la colonne de forage, la réception des ondes émanant de la formation en réponse aux ébranlements communiqués aux terrains par un ensemble (12) de récepteurs sismiques (R) couplés avec la formation traversée par le puits (2), l'enregistrement des ondes reçues aux récepteurs sismiques (R), par un système (11) d'acquisition et de collecte des signaux sismiques détectés par les récepteurs sismiques (R), et la corrélation des signaux sismiques enregistrés avec les dits signaux de référence, **caractérisée en ce qu'**elle comporte l'utilisation pour cette corrélation, de signaux de référence filtrés par les moyens (8) de découplage et des moyens d'amortissement et de filtrage (19, 20) intercalés sur la colonne, tels que le coefficient d'amortissement cumulé des moyens de découplage (8) et des moyens d'amortissement et de filtrage (19, 20), est de préférence compris entre 5 et 15, ces signaux de référence étant fournis par des moyens capteurs (7) disposés au contact du train de tiges sous la surface de la formation géologique et au-dessus des moyens de découplage.

2. Méthode selon la revendication 1, **caractérisée en ce que**, le puits présentant un coude, on utilise pour la corrélation, des signaux de référence issus de moyens capteurs (7) disposés entre le coude et les moyens d'amortissement (8).

3. Méthode selon l'une des revendications précédentes, **caractérisée en ce que** l'on utilise des moyens d'amortissement (19) intercalés sur la colonne pour réduire les émissions parasites dans la formation, et des moyens de filtrage (20) comprenant au moins une portion de colonne (20, 21), dont le diamètre est intermédiaire entre le diamètre des masses-tiges (4) et celui du train de tiges (5), la longueur de cette portion de colonne étant choisie en fonction des longueurs d'onde dans une bande de fréquence sismique, pour atténuer dans cette bande, les réflexions multiples dues aux discontinuités de diamètre intermédiaires entre les masses-tiges et les tiges du train de tiges, les moyens capteurs (7) étant disposés sous les moyens de découplage supplémentaires (19).

4. Dispositif de prospection sismique d'une formation géologique comportant une source d'ébranlements sismiques constituée d'un outil de forage (1) en progression au fond d'un puits (2) et relié à un équipement de forage en surface (6) par une colonne de forage (3) incluant un ensemble de masses-tiges (4) et un train de tiges (5), des moyens moteurs pour l'entraînement de l'outil de forage et des moyens de découplage disposés au voisinage de l'outil de forage (1) permettant à celui-ci de rester sensiblement au contact du fond du puits, un ensemble (12) de récepteurs sismiques (R) couplés avec la formation traversée par le puits pour recevoir des ondes émanant de la formation, et un système (11) d'acquisition et de collecte des signaux sismiques détectés par les récepteurs sismiques, **caractérisé en ce qu'**il comporte des moyens d'amortissement et de filtrage (19, 20) intercalés sur la colonne de forage (3), des moyens capteurs (7) des vibrations de la colonne de forage connectés au système d'acquisition (11) et lui fournissant des signaux de référence, ces moyens capteurs étant disposés au contact du train de tiges (5) sous la surface de la formation géologique et au-dessus des moyens d'amortissement (8), le coefficient d'amortissement cumulé des moyens de découplage (8) et des moyens d'amortissement et de filtrage intercalés (19, 20) étant de préférence compris entre 5 et 15.

5. Dispositif selon la revendication 4, **caractérisé en ce que** les moyens d'amortissement et de filtrage (19-21) comportent des moyens d'amortissement (19) intercalés sur la colonne pour réduire les émissions parasites dans la formation, et des moyens de filtrage (20) comprenant au moins une portion de colonne (20, 21), dont le diamètre est intermédiaire entre le diamètre des masses-tiges (4) et celui du train de tiges (5), la longueur de cette portion de colonne étant choisie en fonction des longueurs d'onde dans une bande de fréquence sismique, pour atténuer dans cette bande, les réflexions multiples dues aux discontinuités de diamètre intermédiaires entre les masses-tiges et les tiges du train de tiges, les moyens capteurs (7) étant disposés sous les moyens de découplage supplémentaires (19).

6. Dispositif selon la revendication 4, **caractérisé en ce que** les moyens d'amortissement et de filtrage (19-21) comportent plusieurs portions de colonne (21) de diamètres décroissants raccordées les unes aux autres, interposées entre les masses-tiges (4) et le train de tiges (5) pour minimiser les réflexions multiples dues aux discontinuités intermédiaires entre les masses-tiges et les tiges du train de tiges.

7. Dispositif selon l'une des revendications 5 à 6, **caractérisé en ce que** les moyens capteurs (7) sont disposés dans un raccord annulaire interposé sur le train de tiges, qui est relié au système d'acquisition (11) par des câbles intégrés dans un ensemble (22) de tiges câblées.

8. Dispositif selon l'une des revendications 5 à 7, **caractérisé en ce que** les moyens capteurs (7) sont reliés au système d'acquisition par une liaison mixte incluant un raccord de câble cylindrique pour relier les moyens capteurs à une portion de câble (24) courant à l'intérieur des tiges, elle-même connectée à un ensemble (25) de tiges câblées remontant jusqu'au système d'acquisition.

## Patentansprüche

1. Seismisches Prospektionsverfahren einer von Bohrlöchern durchquerten geologischen Formation, das die Anwendung von Erschütterungen auf die Terrains mittels einer seismischen Erschütterungsquelle umfasst, die aus einem am Boden eines Bohrlochs (2) fortschreitenden Bohrwerkzeug (1) besteht und mit einer Bohrausrüstung an der Oberfläche (6) durch eine Bohrkolonne (3) verbunden ist, welche eine Anordnung von Schwerstangen (4), ein Bohrgestänge (5) und Motormittel zum Antrieb des Bohrwerkzeugs und Mittel zur Entkopplung umfasst, die in der Nähe des Bohrwerkzeugs (1) angeordnet sind und es jenem ermöglichen, im wesentlichen in Kontakt mit dem Boden des Bohrlochs zu bleiben, wobei das Verfahren die Detektion von Referenzsignalen, welche für Vibrationen der Bohrkolonne indikativ sind, den Empfang von Wellen, die von der Formation in Erwiderung der zu den Terrains durch eine Anordnung (12) von seismischen Empfängern (R), welche mit der durch das Bohrloch (2) durchquerten Formation gekoppelt sind, vermittelten Erschütterungen ausgehen, die Aufzeichnung der von den seismischen Rezeptoren (R) durch ein System (11) zur Aufnahme und zum Sammeln der durch die seismischen Empfänger (R) detektierten seismischen Signale empfangenen Wellen und die Korrelation der mit den Referenzsignalen registrierten seismischen Signale umfasst, **dadurch gekennzeichnet, dass** es die Verwendung für diese Korrelation von Referenzsignalen umfasst, die durch Mittel (8) zum Entkoppeln und Mittel zur Dämpfung und zur Filterung (19, 20) gefiltert sind, die in der Kolonne derart zwischengeschaltet sind, dass der kumulierte Dämpfungskoeffizient der Entkopplungsmittel (8) und der Mittel zur Dämpfung und zur Filtrierung (19, 20) vorzugsweise zwischen 5 und 15 liegt, wobei diese Referenzsignale durch Sensormittel (7) geliefert werden, welche in Kontakt mit dem Bohrgestänge unter der Oberfläche der geologischen Formation und über den Entkopplungsmitteln angeordnet sind.

2. Verfahren nach Anspruch 1, **dadurch gekennzeichnet, dass** das Bohrloch eine Biegung aufweist, man für die Korrelation Referenzsignale verwendet, die von den Sensormitteln (7), welche zwischen der Biegung und den Dämpfungsmitteln (8) angeordnet sind, kommen.

3. Verfahren nach einem der vorhergehenden Ansprüche, **dadurch gekennzeichnet, dass** man Dämpfungsmittel (19) verwendet, die in der Kolonne zwischengeschaltet sind, um die parasitären Emissionen der Formation zu vermindern, und Mittel zum Filtrieren (20), welche wenigstens einen Teil der Kolonne (20, 21) umfassen, dessen Durchmesser zwischen dem Durchmesser der Schwerstangen (4) und jenem des Bohrgestänges (5) liegt, wobei die Länge dieses Kolonnenteils in Abhängigkeit der Wellenlängen in einer seismischen Frequenzbande gewählt wird, um in dieser Bande die mehrfache Reflexionen aufgrund der intermediären Durchmesserdiskontinuitäten zwischen den Schwerstangen und den Stangen des Bohrgestänges zu dämpfen, wobei die Sensormittel (7) unter den zusätzlichen Entkopplungsmitteln (19) angeordnet sind.

4. Seismische Prospektionsvorrichtung einer geologischen Formation, die eine seismische Erschütterungsquelle, welche aus einem am Boden eines Bohrlochs (2) fortschreitendem Bohrwerkzeug (1) besteht, und verbunden ist mit einer Bohrausrüstung an der Oberfläche durch eine Bohrkolonne (3), welche eine Anordnung von Schwerstangen (4) und ein Bohrgestänge (5), Motormittel zum Antrieb des Bohrwerkzeugs und Mittel zum Entkoppeln einschließt, welche in der Nähe des Bohrwerkzeugs (1) angeordnet sind und es jenem ermöglichen, im wesentlichen in Kontakt mit dem Boden des Bohrlochs zu bleiben, umfasst und die eine Anordnung (12) von seismischen Rezeptoren (R), die mit der von dem Bohrloch durchquerten Formation gekoppelt ist, um von der Formation ausgehende Wellen zu empfangen, und ein System (11) zur Aufnahme und zum Sammeln der durch die seismischen Empfänger detektierten seismischen Signale umfasst, **dadurch gekennzeichnet, dass** sie Mittel zur Dämpfung und Filterung (19, 20), die bei der Bohrkolonne (3) zwischengeschaltet sind, Sensormittel (7) der Vibrationen der Bohrkolonne, welche mit dem Aufnahmesystem (11) verbunden sind und ihm Referenzsignale liefern, umfasst, wobei die Sensormittel im Kontakt mit dem Bohrgestänge (5) und der Oberfläche der geologischen Formation und über den Dämpfungsmitteln (8) angeordnet sind und der kumulierte Dämpfungskoeffizient der Entkopplungsmittel (8) und der zwischengeschalteten Mittel zur Dämpfung und zur Filterung (19, 20) vorzugsweise zwischen 5 und 15 liegt.

5. Vorrichtung nach Anspruch 4, **dadurch gekennzeichnet, dass** die Mittel zur Dämpfung und Filterung (19 bis 21) bei der Kolonne zwischengeschaltete Mittel zur Dämpfung (19), um die parasitären Emissionen in der Formation zu vermindern, und Mittel zur Filterung (20), welche wenigstens einen Teil der Kolonne (20, 21) umfassen, dessen Durchmesser zwischen dem Durchmesser der Schwerstangen (4) und jenem des Bohrgestänges (5) liegt, umfassen, wobei die Länge dieses Kolonnenteils in Abhängigkeit der Wellenlängen in der seismischen Frequenzbande gewählt wird, um in dieser Bande die Mehrfachreflektionen aufgrund der intermediären Durchmesserdiskontinuitäten zwischen den Schwerstangen und den Stangen des Bohrgestänges zu dämpfen, wobei die Sensormittel (7) unter den zusätzlichen Entkopplungsmitteln (19) angeordnet sind.

6. Vorrichtung nach Anspruch 4, **dadurch gekennzeichnet, dass** die Mittel zur Dämpfung und zur Filterung (19 bis 21) mehrere Kolonnenteile (21) von abnehmenden Durchmessern umfassen, welche untereinander verbunden sind und zwischen die Schwerstangen (4) und das Bohrgestänge (5) eingefügt sind, um die Mehrfachreflektionen aufgrund der intermediären Diskontinuitäten zwischen den Schwerstangen und den Stangen des Bohrgestänges zu minimieren.

7. Vorrichtung nach einem der Ansprüche 5 bis 6, **dadurch gekennzeichnet, dass** die Sensormittel (7) in einer ringförmigen Verbindung, welche auf dem Bohrgestänge eingefügt ist, angeordnet sind, und welche mit dem Aufnahmesystem (11) durch in einer Anordnung (22) von verkabelten Stangen integrierten Kabeln verbunden ist.

8. Vorrichtung nach einem der Ansprüche 5 bis 7, **dadurch gekennzeichnet, dass** die Sensormittel (7) mit dem Aufnahmesystem durch eine gemischte Verbindung verbunden sind, welche eine zylindrische Kabelverbindung einschließt, um die Sensormittel mit einem Kabelteil (24) zu verbinden, das im Inneren der Stangen verläuft und selbst zu einer Anordnung (25) von verkabelten Stangen verbunden ist, welche bis zum Aufnahmesystem aufsteigen.

## Claims

1. Method for seismic surveying of a geological formation traversed by a bore hole, comprising the application to the ground of shocks by means of a source of seismic shocks constituted by a drilling tool (1) advancing at the bottom of a bore hole (2) and connected to drilling equipment on the surface (6) by a drilling string (3) comprising an assembly of weighting pipes (4), a series of pipes (5), and motive means for entrainment of the drilling tool, and decoupling means disposed in the vicinity of the drilling tool (1) allowing the latter to remain substantially in contact with the bottom of the bore hole, the method comprising detection of reference signals indicative of the vibrations of the drilling string, reception of the waves emanating from the formation in response to the shocks communicated to the ground by an array (12) of seismic receivers (R) coupled with the formation traversed by the bore hole (2), recording of the waves received at the seismic receivers (R) by a system (11) for acquiring and collecting the seismic signals detected by the seismic receivers (R), and correlation of the recorded seismic signals with said reference signals, ***characterised in that*** it comprises use for this correlation of reference signals filtered by the decoupling means (8) and damping and filtering means (19, 20) inserted in the string such that the cumulative damping coefficient of the decoupling means (8) and the damping and filtering means (19, 20) preferably lies between 5 and 15, these reference signals being supplied by pickups (7) disposed in contact with the series of pipes below the surface of the geological formation and above the decoupling means and the damping and filtering means (19, 20).

2. Method according to claim 1, ***characterised in that*** when the bore hole exhibits a bend, reference signals coming from pickups (7) disposed between the bend and the damping means (8) are used for the correlation.

3. Method according to one of the preceding claims, ***characterised in that*** use is made of damping means (19) inserted in the string to reduce parasitic emissions into the formation, and of filtering means (20) comprising at least one string portion (20, 21) the diameter of which lies between the diameter of the weighting pipes (4) and that of the series of pipes (5), the length of this string portion being chosen as a function of the wavelengths in a seismic frequency band, to attenuate in this band the multiple reflections due to the discontinuities of intermediate diameter between the weighting pipes and the pipes of the series of pipes, the pickups (7) being disposed below the additional decoupling means (19).

4. Device for seismic surveying of a geological formation comprising a source of seismic shocks constituted by a drilling tool (1) advancing at the bottom of a bore hole (2) and connected to drilling equipment on the surface (6) by a drilling string (3) including an assembly of weighting pipes (4) and a series of pipes (5), motive means for entrainment of the drilling tool and decoupling means disposed in the vicinity of the drilling tool (1) allowing the latter to remain substantially in contact with the bottom of the bore hole, an array (12) of seismic receivers (R) coupled with the formation traversed by the bore hole to receive waves emanating from the formation, and a system (11) for acquiring and collecting the seismic signals detected by the seismic receivers, ***characterised in that*** it comprises damping and filtering means (19, 20) inserted in the drilling string (3), pickups (7) for the vibrations of the drilling string connected to the acquisition system (11) and supplying it reference signals, these pickups being disposed in contact with the series of pipes (5) below the surface of the geological formation and above the damping means (8), the cumulative damping coefficient of the decoupling means (8) and the inserted damping and filtering means (19, 20) preferably lying between 5 and 15.

5. Device according to claim 4, ***characterised in that*** the damping and filtering means (19 - 21) comprise damping means (19) inserted in the string to reduce parasitic emissions into the formation, and filtering means (20) comprising at least one string portion (20, 21), the diameter of which lies between the diameter of the weighting pipes (4) and that of the series of pipes (5), the length of this string portion being chosen as a function of the wavelengths in a seismic frequency band, to attenuate in this band the multiple reflections due to the discontinuities of intermediate diameter between the weighting pipes and the pipes of the series of pipes, the pickups (7) being disposed below the additional decoupling means (19).

6. Device according to claim 4, ***characterised in that*** the damping and filtering means (19 - 21) comprise a plurality of string portions (21) of decreasing diameters connected to one another, interposed between the weighting pipes (4) and the series of pipes (5) to minimise the multiple reflections due to the intermediate discontinuities between the weighting pipes and the pipes of the series of pipes.

7. Device according to one of claims 5 to 6, ***characterised in that*** the pickups (7) are disposed in an annular connector interposed in the series of pipes and connected to the acquisition system (11) by cables incorporated in an assembly (22) of cabled pipes.

8. Device according to one of claims 5 to 7, ***characterised in that*** the pickups (7) are connected to the acquisition system by a mixed link including a cylindrical cable connector to connect the pickups to a portion of cable (24) running inside the pipes, itself connected to an assembly (25) of cabled pipes going up to the acquisition system.
